# EUROPÄISCHE PATENTSCHRIFT

(11) **EP 2 718 650 B1**
(45) Veröffentlichungstag und Bekanntmachung des Hinweises auf die Patenterteilung: **21.03.2018**
(21) Anmeldenummer: 12751440.4
(22) Anmeldetag: 06.06.2012
(51) Int. Cl.: F28D 7/00, F28D 7/02, C10B 47/44, F28D 7/12, F25B 30/06, F24D 17/02, F28F 1/36

(54) **VERFAHREN ZUR KÜHLUNG VON FLUIDEN MITTELS EINER FÖRDERSCHNECKE**
METHOD FOR COOLING FLUIDS BY MEANS OF A FEED SCREW
PROCÉDÉ DE REFROIDISSEMENT DE FLUIDES AU MOYEN D'UNE VIS TRANSPORTEUSE

(30) Priorität: 08.06.2011 DE 102011103630
(43) Veröffentlichungstag der Anmeldung: 16.04.2014
(73) Patentinhaber: Jürgen Kuhn und Michael Kuhn Grundstücksverwaltungs und Verpachtungs GbR, 74746 Höpfingen (DE)
(72) Erfinder: HOMBÜCHER, Heinz-Dieter, 63179 Obertshausen (DE); BLAHA, Stefan, 74740 Adelsheim (DE); KUHN, Michael, 74746 Höpfingen (DE)
(74) Vertreter: Reiser & Partner Patentanwälte mbB
(86) Internationale Anmeldenummer: PCT/DE2012/100175
(87) Internationale Veröffentlichungsnummer: WO 2012/167784

(56) Entgegenhaltungen:
- EP-A2- 1 647 589
- DE-A1-102009 015 515

## Beschreibung

Die Erfindung betrifft eine Vorrichtung zum Kühlen oder Erwärmen von Fluiden durch Wärmeaustausch mit einem Wärmeträger gemäß dem Oberbegriff des Anspruchs 1.

Die Kühlung von Schüttgütern mit einer Förderschnecke ist bereits bekannt und wird häufig praktiziert. Dabei werden das Kernrohr, das Außenrohr bzw. der Trog und auch die Schneckenflügel gekühlt. Dabei lässt sich der Wärmeentzug regeln in dem weniger Wärmeträger durch das Kernrohr, dem Außenrohr oder den Schneckenflügel gepumpt wird. Ebenfalls kann die Drehgeschwindigkeit der Förderschecke geregelt werden. Damit lässt sich der Wärmeentzug jedoch nur in engen Grenzen regeln, eine Verringerung der Drehzahl der Förderschecke bewirkt eine Verringerung der turbulenten Strömungen an den Wärmeaustauschflächen und somit eine Verringerung des Wärmeentzugs bzw. der Wärmeübertragung.

Die Kühlung des Kernrohres ist nach dem derzeitigen Stand der Technik sehr aufwendig und uneffektiv.

Aus der DE 10 2009 015515 A1 ist eine Vorrichtung zur Wärmerückgewinnung aus Brauch- oder Abwasser bekannt. Beschrieben wird eine Vorrichtung zur Kühlung von Abwasser mit einem das Abwasser führenden Förderrohr mit den Merkmalen des Oberbegriffs von Anspruch 1. Weiterhin ist eine in das Förderrohr integrierte Förderschnecke vorgesehen, die zur Wärmerückgewinnung genutzt werden soll. Diese soll einfach steuerbar sein. Dazu ist die Vorrichtung mit einer in die Außenwand des Förderrohrs integrierten Einrichtung versehen, so dass die Außenwand des Förderrohrs als Wärmeübertragungsfläche nutzbar ist. Mittels der Einrichtung kann ein Fluid direkt oder indirekt zur Bereitstellung von Wärmeenergie für einen oder mehrere Verbraucher erwärmt werden oder das Fluid kann für eine Wärmepumpe erwärmt werden. Mittels der Wärmepumpe wird dann ein zweites Fluid für die Verbraucher erwärmt.

Weiterhin ist aus der GB 1482518 ein Solarheizungssystem mit einer gekühlten Förderschnecke bekannt.

Aus dem beschriebenen Stand der Technik lässt sich somit die vorhandene Wärmeenergie nur ineffektiv entziehen, bei ungleichmäßigem oder schwallmäßigen Zufluss der Fluide kann die Verweildauer innerhalb der Förderschnecke nur mit Drehzahländerung des Kernrohres und somit nur mit Verschlechterung der Wärmeübertragung betrieben werden.

Aufgabe der vorliegenden Erfindung ist es daher, Fluiden bei variablen Volumenströmen, die zusätzlich noch schwallmäßig anfallen können, die maximal mögliche Energie zu entziehen beziehungsweise zuzuführen, sowie auf die vorgegebene Temperatur zu kühlen beziehungsweise zu erwärmen, wobei eine größtmöglicher Turbulenz der zu kühlenden Fluide und eine größtmöglichen Turbulenz und Verweildauer des Wärmeträgers gegeben sein soll.

Die Lösung der Aufgabe zur Kühlung oder Erwärmung von Fluiden gestaltet sich nach den Merkmalen von Anspruch 1.

Erfindungsgemäß werden eine Vorrichtung aus einem Förderrohr mit einer eingelassenen Förderschnecke, einem dem Förderrohr zugeordneten Pufferspeicher sowie eine Überströmrohr (Bypass), das von der Förderschnecke zurück in den Pufferbehälter führt, vorgesehen. Dabei wird der Pufferbehälter in bevorzugter Weise für den maximal möglichen Schwall des Fluides ausgebildet, die Größe des Überströmrohres (Bypass) wird in bevorzugter Weise für den maximal möglichen Volumenstrom ausgelegt. Zur Kühlung oder Erwärmung des Fluids wird der Bypass so lange geöffnet bis die Temperatur am Austritt aus der Förderschnecke die gewünschte Größe erreicht hat. Dabei kann in bevorzugter Weise die optimale Drehzahl der Förderschnecke eingestellt werden, bei geringerem Zulauf in den Pufferbehälter kann die Drehzahl der Förderschnecke verringert und das Überströmrohr (Bypass) mit einer in bevorzugter Weise automatisch ausgebildeten Absperrvorrichtung verschlossen werden. Damit der maximal mögliche Füllstand im Pufferbehälter nicht überschritten werden kann, gibt es in bevorzugter Weise einen Überlauf vom Pufferbehälter direkt in Austrittsrohr der Förderschnecke.

Weiterhin ist in das in bevorzugter Weise aus Metall gefertigte Kernrohr, ein zur Kühlung beziehungsweise Erwärmung mit dem Wärmeträger, ein in bevorzugter Weise aus Kunststoff gefertigtes Rohr gesteckt, welches mit einer in bevorzugter Weise aus Kunststoff gefertigten Spirale umwickelt ist. Dabei durchströmt der Wärmeträger zuerst das Kunststoffrohr von innen. Weil das Kernrohr nur einseitig geöffnet ist, wird der Wärmeträger anschließend über der mit der Spirale umwickelten Außenwand des Kunststoffrohres zurück zum Anfang des Kernrohres geleitet. Somit ist das Gegenstromprinzip ausgebildet, durch das Kunststoffrohr eine Isolierung zwischen Wärmeträgereintritt und - austritt gewährleistet, der zurückzulegende Weg des Wärmeträgers sehr lang und die Strömung des Wärmeträgers turbulent.

Die Erfindung gestaltet sich in bevorzugter Bauweise in Form eines Pufferbehälters in der ein schräg eingebrachter Schneckenförderer endet, welcher das zu kühlende oder zu erwärmende Fluid aus dem Pufferbehälter fördert. Zwischen der Förderschnecke und dem Pufferbehälter wird ein Überströmrohr (Bypass) ausgebildet, welche in bevorzugter Weise mit einer automatischen Absperrvorrichtung verschlossen oder geöffnet werden kann. In bevorzugter Weise wird der Pufferbehälter, die Überströmvorrichtung und das Außenrohr mit einem Halbrohr umwickelt um ebenfalls Energie an den Wärmeträger zu übertragen. In das Kernrohr wird ein spiralförmig umwickeltes Kunststoffrohr eingebracht welches mit Wärmeträger durchströmt wird und ebenfalls Energie überträgt. Damit der Pufferbehälter nicht überfüllt werden kann wird in bevorzugter Weise zwischen dem Pufferbehälter und dem Austrag der Förderschnecke ein Überlauf ausgebildet.

Die mit der Erfindung erzielbaren Vorteile bestehen unter anderem in den im Folgenden beschriebenen vorteilhaften Wirkungen:
a) Die Ausbeutung der Energie erfolgt auf kleinsten Raum
b) Das Fluid kann bei jedem Volumenstrom auf eine bestimmte Temperatur gekühlt beziehungsweise erwärmt werden ohne Drehzahländerung von der Förderschnecke.
c) Die von der Förderschnecke erzeugte Turbulenz an den Wärmeaustauschflächen wird nicht beeinflusst.
d) Die Einhaltung der Austrittstemperatur des Fluid aus der Förderschnecke ist auch bei einer schwallmäßigen, unregelmäßigen Befüllung des Pufferbehälters gewährleistet.
e) Es können Förderschnecken in einem Rohr oder in einem offenen Trog eingesetzt werden
f) Mehrere Förderschnecken können parallel oder in Reihe betrieben werden
g) Eine Überfüllung des Pufferbehälters wird vermieden.
h) Mit dem Kernrohr kann auf einfachste Weise sehr effizient Energie übertragen werden.

Ein Ausführungsbeispiel der Erfindung ist im Folgenden anhand von Zeichnungen beispielhaft dargestellt. Dabei zeigen
- Figur 1: eine erfindungsgemäße Anordnung einer Förderschnecke mit einem Überströmrohr und
- Figur 2: die Ausbildung eines Kernrohres der Förderschnecke.

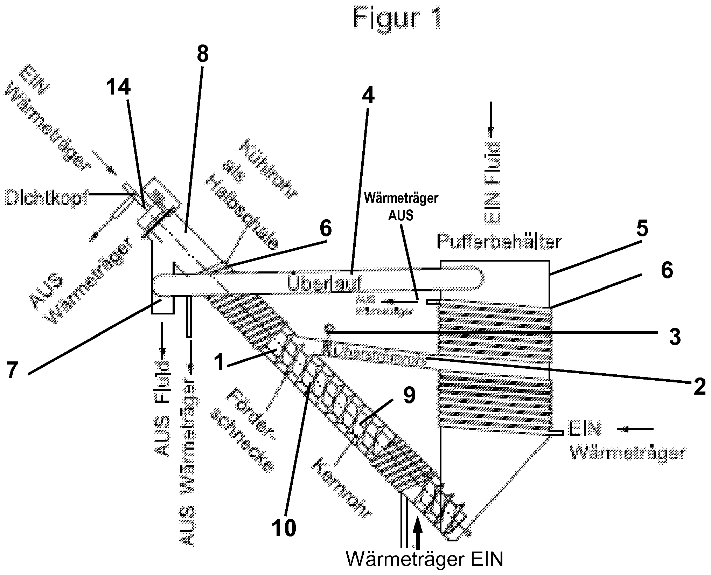

In Figur 1 ist die bevorzugte Anordnung der Erfindung dargestellt, die eine verbesserte Kühlung eines abzufördernden Fluids aufweist, wobei diese mittels eines Überströmrohres 2 erfolgt, das auch als Bypass bezeichnet werden kann und zwischen einer Förderschnecke 1 und einem Pufferbehälter 5 angeordnet ist. An Förderelementen für das zu fördernde Fluid sind für einen erweiterten Wärmeentzug aus dem Fluid den Wandungen zugeordnete Halbrohrschlangen 6 dargestellt.

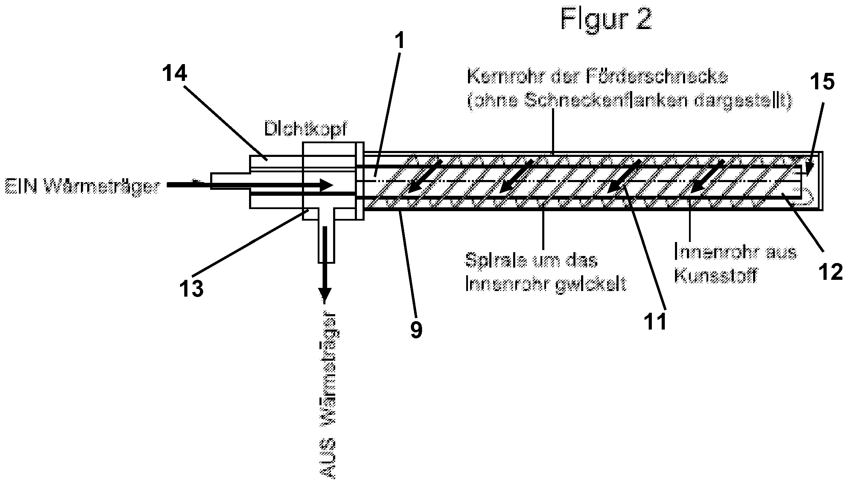

In Figur 2 ist in einer bevorzugten Ausbildung eine verbesserte Kühlung einer Förderschnecke 1 mit einem Kernrohr 10 aus Kunststoff und einer um das Kernrohr 10 herum gewickelten Leitspirale 11 dargestellt.

In Figur 1 ist eine erste erfindungsgemäße Anordnung eine Förderschnecke 1 mit einem Überströmrohr 2, einer automatischen Absperreinrichtung 3, einem Überlauf 4 und einem Pufferbehälter 5 dargestellt. An Bauteilen (hier Pufferbehälter 5 und Förderrohr 8), aus denen mittels eines Wärmeträgers Energie übertragen werden kann, sind Halbrohrschlangen 6 zur Wärmeaufnahme vorgesehen. Ein Förderrohr 8, in dem die Förderschnecke 1 drehbar angeordnet ist, weist am Ende einen Auslass 7 für das die Abwärme tragende Fluid auf. Auf der Einlassseite endet das Förderrohr 8 gemeinsam mit einem Zufluss der Förderschnecke 1 am unteren Ende des Pufferspeichers 5. In dem Förderrohr 8 ist die Förderschnecke 1 mit einem auf einem Kernrohr 9 aufgewickelten Schneckengewinde 10 angeordnet. Die Förderschnecke 1 ist in dem Förderrohr 8 drehbar gelagert und wird mittels eines einseitig angeordneten Antriebes in Rotation versetzt. Das zu kühlende Abwärme tragende Fluid wird von oben in den Pufferbehälter 5 gefüllt. Die Förderschnecke 1 fördert das zu kühlende Fluid durch das Förderrohr 8 hin zum Austrag 7.

Das Schneckengewinde 10 kann ebenfalls als von einem Wärmeträger durchströmtes und damit Wärme transferierendes Bauelement ausgeführt sein.

Als Verbindung zwischen dem Pufferspeicher 5 und dem Förderrohr 8 ist das Überströmrohr 2 angeordnet. Das Überströmrohr 2 ist dabei vorzugsweise in einem oberen Bereich an das Förderrohr 8 angekoppelt. In dem Überströmrohr 2 ist die Absperreinrichtung 3 angeordnet. Die Absperreinrichtung 3 ist steuerungstechnisch mit einer Temperaturmesseinrichtung am oberen Ende des Förderrohres 8 bzw. am Austrag 7 gekoppelt.

Am Austrag 7 oder im oberen Bereich des Förderrohres 8 der Förderschnecke 1 ist eine die Temperatur des austretenden Fluids erfassende Messvorrichtung vorgesehen. Wenn das zu kühlenden Fluid am Austrag 7 noch nicht eine gewünschte vorgebbare Temperatur, also eine einstellbare Mindest-Temperaturabsenkung, erreicht hat, öffnet sich die automatisch wirkende Absperreinrichtung 3.
Hierzu kann eine steuerungstechnische Verbindung zwischen der Temperaturmessung und einem Antrieb an der Absperreinrichtung 3 vorgesehen sein.

Nach dem Öffnen der Absperreinrichtung 3 strömt das noch weiter abzukühlende Fluid gefördert von der Förderschnecke 1 über das Überströmrohr 2 zurück in den Pufferbehälter 5. Dieser Vorgang wird so lange fortgesetzt oder wiederholt bis das Fluid die gewünschte Zieltemperatur erreicht hat. Hierbei kann zur Temperaturregelung der Durchfluss durch das Überströmrohr 2 von der automatischen Absperreinrichtung 3 begrenzt werden.

Zur verbesserten Handhabung der Temperaturregelung im Fluid kann der Durchfluss durch das Überströmrohr 2 von der automatischen Absperreinrichtung 3 begrenzt werden. Diese Begrenzung kann von der Menge eines im Pufferspeicher 5 vorliegenden Fluidvorrates und von der Menge des Zuflusses an Fluid zum Pufferspeicher 5 abhängig gemacht werden.
Die Absperreinrichtung kann auch manuell gesteuert werden.

Das normalerweise schwallweise anfallende Fluid wird im Pufferbehälter 5 aufgefangen. Daher wechselt der Füllstand im Pufferbehälter 5 nahezu ständig. Um die Füllmenge des Pufferbehälters 5 zu begrenzen und einen unbeabsichtigten Überlauf zu vermeiden, ist zwischen dem Pufferbehälter 5 und dem Austrag 7 ein Überlauf 4 angeordnet, aus dem überschüssiges Fluid direkt zum Austrag 7 hin abströmen kann.

Sowohl der Pufferbehälter 5 als auch das äußere Förderrohr 8 können mit Kühlrohren 6 ummantelt sein, um diese Bauelemente zusätzlich an der Außenseite zu kühlen und auch von dort Wärmeenergie zurück zu gewinnen.

Die Kühlrohre 6 können als Halbschalen an dem Pufferbehälter 5 oder dem Förderrohr 8 angebracht sein, um den Wärmeübergang zu einem durch die Kühlrohre 6 geführten Wärmeträger zu erhöhen.

In Figur 2 ist das Kernrohr 9 der Förderschnecke 1 im Detail dargestellt. Das Kernrohr 5 weist ein mit einer Leitspirale 11 umwickeltes Innenrohr 12 auf. Weiterhin sind ein Anschlussflansch 13 und ein Dichtkopf 14 dargestellt. Das Innenrohr 12 wird auf den Dichtkopf 14 aufgesteckt. Ein durch den Dichtkopf 14 einströmender Wärmeträger wird folglich in das Innenrohr 12 eingeleitet und staut sich gegen das am Ende 15 verschlossene Kernrohr 9 auf. Anschließend strömt der Wärmeträger über die Außenseite des Innenrohres 12 zurück zum Dichtkopf 14. Dabei wird der Wärmeträger mit der um das Innenrohr 12 gewickelten Leitspirale 11 gezwungen spiralförmig zwischen dem Kernrohr 9 der Förderschnecke 1 und dem Innenrohr 12 zu strömen. Hierdurch verlängert sich die vom Wärmeträger zu durchströmende Strecke und die Turbulenz im Wärmeträger wird erhöht, so dass dadurch der Wärmeübergang am Kernrohr 9 der Förderschnecke 1 gesteigert wird.
Wenn das Innenrohr 12 aus einem Kunststoff gefertigt wird, kann der Wärmeübergang zwischen dem kühler einströmenden und in Gegenrichtung erwärmt ausströmenden Wärmeträger sehr gering gehalten werden, so dass sich der Wirkungsgrad verbessert. Da das Kernrohr 9 aus Metall gefertigt ist, wirkt das Innenrohr 12 gleichzeitig an dieser Stelle als Isolator nach innen zu dem einströmenden Wärmeträger und der gewünschte Wärmeübergang findet bevorzugt über das Kernrohr 9 nach außen hin zum Fluid statt.

Die sind sowohl zur Entnahme von Wärmeenergie aus dem Fluid für die Verwendung an anderem Ort als auch zur Abgabe von Wärmeenergie an das Fluid geeignet, so dass auch überschüssige Wärme von einem anderen Ort über das Fluid abgeführt werden kann.

## Patentansprüche

1. Vorrichtung zum Kühlen oder Erwärmen von Fluiden mit einer Förderschnecke (1), einem Pufferbehälter (5) für die Fluide und Wärmeaustauscheinrichtungen an der Förderschnecke (1) und/oder dem Pufferbehälter (5), zum Entziehen von Wärmeenergie aus den von der Förderschnecke (1) und dem Pufferbehälter (5) geförderten Fluiden,
**dadurch gekennzeichnet,**
**dass** ein Überströmrohr (2) zwischen der Förderschnecke (1) und dem Pufferbehälter (5) angeordnet ist, wobei eine Einrichtung vorgesehen ist, mittels derer das Fluid ganz oder teilweise über das Überströmrohr (2) zwischen der Förderschnecke (1) und dem Pufferbehälter (5) umwälzbar ist, derart, dass eine erforderliche Temperatur des Fluids beim Austreten an einem Austrag (7) aus einem Förderrohr (8) der Förderschnecke (1) erreicht werden kann.

2. Vorrichtung nach Anspruch 1, **gekennzeichnet durch** einen Überlauf (4) vom Pufferbehälter (5) zum Austrag (7) des Förderrohrs (8) der Förderschnecke (1).

3. Vorrichtung nach Anspruch 1 oder 2, **gekennzeichnet durch** eine Einrichtung zur Erfassung der Temperatur des am Austrag (7) oder im oberen Bereich zum Austrag (7) des Förderrohrs (8) der Förderschnecke (1) hin austretenden Fluids.

4. Vorrichtung nach Anspruch 3, wobei die Einrichtung zur Erfassung der Temperatur mit einer Regeleinrichtung zur Steuerung des Durchflusses im Überlauf (2) von dem Pufferbehälter (5) zum Förderrohr (8) der Förderschnecke (1) verbunden ist.

5. Vorrichtung nach einem der Ansprüche 1 bis 4, **dadurch gekennzeichnet, dass** die Förderschnecke (1) ein einseitig geschlossenes Kernrohr (9) mit einem in das Kernrohr (9) der Förderschnecke (1) eingeführten Innenrohr (12) zum Kühlen aufweist.

6. Vorrichtung nach Anspruch 5, **dadurch gekennzeichnet, dass** das Innenrohr (12) an einem Dichtkopf (14) zum Abschließen des Innenrohres (12) derart befestigt ist, dass ein Wärmeträger an der Innenseite in das Innenrohr (12) einströmend, das Innenrohr (12) nach unten durchströmend und anschließend zwischen der Außenseite des Innenrohres (12) und der Innenseite des Kernrohres (9) zurück zum Dichtkopf (14) strömend geführt wird.

7. Vorrichtung nach Anspruch 5 oder 6,, **dadurch gekennzeichnet, dass** das Innenrohr (12) mit einer Leitspirale (11) umwickelt ist, derart, dass der Wärmeträger beim Rückströmen auf der Außenseite des Innenrohres (12) durch die Leitspirale (11) zwangsgeführt spiralförmig zwischen Außenseite des Innenrohres (12) und der Innenseite des Kernrohres (9) zurück zum Dichtkopf (14) strömt.

8. Vorrichtung nach einem der Ansprüche 5 bis 7, **dadurch gekennzeichnet, dass** das Innenrohr (12) aus Kunststoff oder einem anderen als Isolator gegen erhöhten Wärmeübergang wirksamen Stoff gebildet ist.

9. Vorrichtung nach Anspruch 4, **gekennzeichnet durch** ein beidseitig offenes Kernrohr (9) der Förderschnecke (1), wobei der Wärmeträger durch die Leitspirale (11) zwangsgeführt spiralförmig zwischen der Außenseite des Innenrohres (12) und der Innenseite des Kernrohres (9) von dem einen Ende des Kernrohres (9) zu dessen anderen Ende strömt.

10. Vorrichtung nach einem der Ansprüche 1 bis 9, mit mehreren parallel geschalteten Förderschnecken (1) und einem gemeinsamen Überströmrohr (2) zum Pufferspeicher (5) oder mit mehreren parallel geschalteten Förderschnecken (1) mit jeweils einem jeder der Förderschnecken (1) zugeordneten Überströmrohr (2) zum Pufferspeicher (5).

11. Vorrichtung nach einem der Ansprüche 1 bis 10, wobei an der Außenseite eines Förderrohrs (8) und/oder an der Außenseite eines Pufferspeichers (5) in Wärme übertragender Verbindung Kühlrohre (6) mit einer Wärmeträgerzu- und -abführung vorgesehen sind.

12. Vorrichtung nach einem der Ansprüche 1 bis 11, wobei auf dem Kernrohr der Förderschnecke (1) ein Schneckengewinde zur Förderung des Fluids in dem Förderrohr (8) vorgesehen ist und wobei in dem Schneckengewinde eine Einrichtung zur Führung eines Wärmeträgers in Verbindung mit einer Wärmeträgerzuführung und einer Wärmeträgerabführung vorgesehen ist.

## Claims

1. Device for cooling or heating fluids, comprising a conveyor screw (1), a buffer container (5) for the fluids, and heat exchanger devices on the conveyor screw (1) and/or the buffer container (5), for drawing thermal energy from the fluids conveyed by the conveyor screw (1) and the buffer container (5),
**characterised in that**
an overflow pipe (2) is arranged between the conveyor screw (1) and the buffer container (5), a means being provided by means of which the fluid can be circulated between the conveyor screw (1) and the buffer container (5) via the overflow pipe (2) in whole or in part, in such a way that a required temperature of the fluid upon exiting a conveyor pipe (8) of the conveyor screw (1) at a discharge (7) can be achieved.

2. Device according to claim 1, **characterised by** an overflow (4) from the buffer container (5) to the discharge (7) of the conveyor pipe (8) of the conveyor screw (1).

3. Device according to either claim 1 or claim 2, **characterised by** a means for detecting the temperature of the fluid exiting at the discharge (7) or in the upper region towards the discharge (7) of the conveyor pipe (8) of the conveyor screw (1).

4. Device according to claim 3, wherein the means for detecting the temperature is connected to a regulation device for controlling the throughput in the overflow (2) from the buffer container (5) to the conveyor pipe (8) of the conveyor screw (1).

5. Device according to any of claims 1 to 4, **characterised in that** the conveyor screw (1) comprises a core pipe (9), which is closed at one end and which comprises an inner pipe (12) inserted into the core pipe (9) of the conveyor screw (1).

6. Device according to claim 5, **characterised in that** the inner pipe (12) is fixed to a sealing head (14) for closing off the inner pipe (12), in such a way that a heat transfer medium is guided so as to flow into the inner pipe (12) at the inner face, to flow downward through the inner pipe (12), and subsequently to flow back to the sealing head (14) between the outer face of the inner pipe (12) and the inner face of the core pipe (9).

7. Device according to either claim 5 or claim 6, **characterised in that** the inner pipe (12) is wound around by a guide coil (11), in such a way that, when flowing back on the outer face of the inner pipe (12), the heat transfer medium is forced by the guide coil (11) to flow back to the sealing head (14) helically between the outer face of the inner pipe (12) and the inner face of the core pipe (9).

8. Device according to any of claims 5 to 7, **characterised in that** the inner pipe (12) is formed from plastics material or another substance effective as an insulator against elevated heat transfer.

9. Device according to claim 4, **characterised by** a core pipe (9) of the conveyor screw (1) which is open at both ends, the heat transfer being forced by the guide coil (11) to flow from one end of the core pipe (9) to the other end thereof helically between the outer face of the inner pipe (12) and the inner face of the core pipe (9).

10. Device according to any of claims 1 to 9, comprising a plurality of conveyor screws (1) connected in parallel and a shared overflow pipe (2) to the buffer store (5), or comprising a plurality of conveyor screws (1) connected in parallel and having an overflow pipe (2) to the buffer store (5) assigned to each of the conveyor screws (1).

11. Device according to any of claims 1 to 10, wherein cooling pipes (6) having a heat transfer medium inlet and outlet are provided on the outer face of a conveyor pipe (8) and/or on the outer face of a buffer store (5) in heat-transferring connection.

12. Device according to any of claims 1 to 11, wherein a screw thread for conveying the fluid in the conveyor pipe (8) is provided on the core pipe of the conveyor screw (1), and wherein a means for guiding a heat transfer medium is provided in the screw thread in connection with a heat transfer medium inlet and a heat transfer medium outlet.

## Revendications

1. Dispositif de refroidissement ou de réchauffement de fluides, comprenant une vis sans fin (1), un réservoir tampon (5) pour les fluides et des moyens d'échange de chaleur au niveau de la vis sans fin (1) et/ou du réservoir tampon (5), afin de retirer de l'énergie thermique des fluides refoulés par la vis sans fin (1) et le réservoir tampon (5),
**caractérisé en ce qu'**un tuyau de débordement (2) est disposé entre la vis sans fin (1) et le réservoir tampon (5), dans lequel un moyen est prévu et permet de mettre en circulation le fluide en totalité ou en partie par le biais du tuyau de débordement (2) entre la vis sans fin (1) et le réservoir tampon (5) de telle sorte qu'une température requise pour le fluide à la sortie peut être atteinte au niveau d'une évacuation (7) d'un tuyau de refoulement (8) de la vis sans fin (1).

2. Dispositif selon la revendication 1, **caractérisé par** un déversoir (4) du réservoir tampon (5) vers l'évacuation (7) du tuyau de refoulement (8) de la vis sans fin (1).

3. Dispositif selon la revendication 1 ou 2, **caractérisé par** un moyen de détection de la température du fluide sortant au niveau de l'évacuation (7) ou dans la zone supérieure vers l'évacuation (7) du tuyau de refoulement (8) de la vis sans fin (1).

4. Dispositif selon la revendication 3, dans lequel le moyen de détection de la température est relié à un moyen de régulation pour commander l'écoulement dans le déversoir (2) depuis le réservoir tampon (5) vers le tuyau de refoulement (8) de la vis sans fin (1).

5. Dispositif selon une des revendications 1 à 4, **caractérisé en ce que** la vis sans fin (1) présente un tube carottier (9) fermé d'un côté, avec un tube intérieur (12) introduit dans le tube carottier (9) de la vis sans fin (1) pour le refroidissement.

6. Dispositif selon la revendication 5, **caractérisé en ce que** le tube intérieur (12) est fixé à une tête étanche (14) pour fermer le tube intérieur (12) de telle sorte qu'un caloporteur est guidé sur le côté intérieur en affluant dans le tube intérieur (12), en traversant vers le bas le tube intérieur puis en coulant entre le côté extérieur du tube intérieur (12) et le côté intérieur du tube carottier (9) pour revenir vers la tête étanche (14).

7. Dispositif selon la revendication 5 ou 6, **caractérisé en ce que** le tube intérieur (12) est enroulé avec une spirale conductrice (11) de telle sorte que, lors du retour sur le côté extérieur du tube intérieur (12), le caloporteur s'écoule à travers la spirale conductrice (11) selon un guidage forcé en forme de spirale entre le côté extérieur du tube intérieur (12) et le côté intérieur du tube carottier (9) pour revenir vers la tête étanche (14).

8. Dispositif selon une des revendications 5 à 7, **caractérisé en ce que** le tube intérieur (12) est formé d'une matière plastique ou d'une autre matière agissant en tant qu'isolant contre les augmentations de transfert de chaleur.

9. Dispositif selon la revendication 4, **caractérisé par** un tube carottier (9) de la vis sans fin (1) qui est ouvert des deux côtés, dans lequel le caloporteur s'écoule à travers la spirale conductrice (11) selon un guidage forcé en forme de spirale entre le côté extérieur du tube intérieur (12) et le côté intérieur du tube carottier (9) depuis une extrémité du tube carottier (9) jusqu'à son autre extrémité.

10. Dispositif selon une des revendications 1 à 9, comprenant plusieurs vis sans fin accouplées en parallèle (1) et un tuyau de débordement (2) commun par rapport à l'accumulateur tampon (5) ou comprenant plusieurs vis sans fin accouplées en parallèle (1) avec un tuyau de débordement (2) associé à chacune des vis sans fin (1) par rapport à l'accumulateur tampon (5).

11. Dispositif selon une des revendications 1 à 10, dans lequel au côté extérieur d'un tuyau de refoulement (8) et/ou au côté extérieur d'un accumulateur tampon (5) des tuyaux de refroidissement (6) sont prévus en liaison de transmission de chaleur avec une entrée et une sortie de caloporteur.

12. Dispositif selon une des revendications 1 à 11, dans lequel au tube carottier de la vis sans fin (1) un filetage de vis est prévu pour refouler le fluide dans le tuyau de refoulement (8) et dans lequel, dans le filetage de vis, un moyen de guidage d'un caloporteur est prévu en lien avec une alimentation de caloporteur et une évacuation de caloporteur.
